# EUROPEAN PATENT APPLICATION

(11) **EP 4 220 516 A1**
(43) Date of publication of application: **02.08.2023**
(21) Application number: 21871984.7
(22) Date of filing: 02.08.2021
(51) Int. Cl.: G06Q 20/20, G06Q 30/02

(54) **RECEIPT SERVER, INFORMATION PROCESSING METHOD, PROGRAM RECORDING MEDIUM, AND SERVER SYSTEM**

(30) Priority: 28.09.2020 JP 2020161598
(71) Applicant: Toshiba TEC Kabushiki Kaisha, Tokyo 141-8562 (JP)
(72) Inventor: NAMBU, Kazuya, Tokyo 141-8562 (JP); ARAI, Yasuhiro, Tokyo 141-8562 (JP); SAKURAI, Kenji, Tokyo 141-8562 (JP)
(74) Representative: Bandpay & Greuter
(86) International application number: PCT/JP2021/028590
(87) International publication number: WO 2022/064852

(57) **Abstract**

A receipt server includes an acquisition unit and an output unit. The acquisition unit acquires receipt data on a commercial transaction, identified by transaction identification information included in settlement sales data reported from a settlement terminal to a settling agent that assists settlement of the commercial transaction, from a receipt storage unit that stores receipt data generated by the settlement terminal at a time of settlement of the commercial transaction. The output unit outputs information, relating to a purchased commercial product included in the receipt data acquired by the acquisition unit to a settlement server of the settling agent.

## Description

### FIELD

Embodiments of the present invention relate generally to a receipt server, an information processing method, a program recording medium, and a server system including a receipt server.

### BACKGROUND

In recent years, electronic settlement in which settlement of transactions is electronically processed has attracted attention. Electronic settlement includes, for example, credit card settlement, electronic money settlement, and code settlement using a bar code, a two-dimensional code, or the like. When electronic settlement is executed in a brick-and-mortar shop, settlement sales data is output from a settlement terminal to a server of a settling agent. The settlement sales data includes information on a person making the settlement, information on a transaction date and time, information on a transaction shop, a settlement amount, etc. However, the settlement sales data does not include information of a commercial product purchased by the person making the settlement. Therefore, the settling agent can grasp information on who utilized the electronic settlement where, when, and for how much money, but cannot grasp information on what was purchased. There is a demand for a service for providing a settling agent with information on a commercial product purchased by a person making the settlement using electronic settlement.

### CITATION LIST

### PATENT LITERATURE

Patent Literature 1: Jpn. Pat. Appln. KOKAI Publication No. 2020-113005

### SUMMARY

An object to be achieved by embodiments of the present invention is to provide a receipt server and a server system that can realize a service for providing a settling agent with information on a commercial product purchased by a person making the settlement using electronic settlement.

### BRIEF DESCRIPTION OF THE DRAWINGS

FIG. 1 is a system diagram showing an outline of an embodiment.
FIG. 2 is a schematic diagram showing a data structure of a POS side setting table.
FIG. 3 is a flowchart showing a main procedure in a receipt processing unit.
FIG. 4 is a block diagram showing a main circuit configuration of a receipt server.
FIG. 5 is a schematic diagram showing a data structure of a server side setting table.
FIG. 6 is a flowchart showing a procedure of a receipt data sorting process executed by a processor of the receipt server.
FIG. 7 is a schematic diagram showing a structure of first receipt data stored in a first file.
FIG. 8 is a schematic diagram showing a structure of second receipt data stored in a second file.
FIG. 9 is a block diagram showing a main circuit configuration of a settlement server.
FIG. 10 is a schematic diagram showing a structure of settlement sales data stored in a settlement information file.
FIG. 11 is a flowchart showing a procedure of a main information process executed by a processor of the settlement server.
FIG. 12 is a flowchart showing a procedure of a main information process executed by the processor of the receipt server.
FIG. 13 is a flowchart showing a procedure of a main information process executed by the processor of the settlement server of another embodiment.
FIG. 14 is a flowchart showing a procedure of a main information process executed by the processor of the receipt server of another embodiment.

### DETAILED DESCRIPTION

In one embodiment, a receipt server includes an acquisition unit and an output unit. The acquisition unit acquires receipt data on a commercial transaction, identified by transaction identification information included in settlement sales data reported from a settlement terminal to a settling agent that assists settlement of the commercial transaction, from a receipt storage unit that stores receipt data generated by the settlement terminal at a time of settlement of the commercial transaction. The output unit outputs information, relating to a purchased commercial product included in the receipt data acquired by the acquisition unit, to a settlement server of the settling agent.

Hereinafter, an embodiment of a receipt server and a server system will be described with reference to the accompanying drawings.

### [First Embodiment]

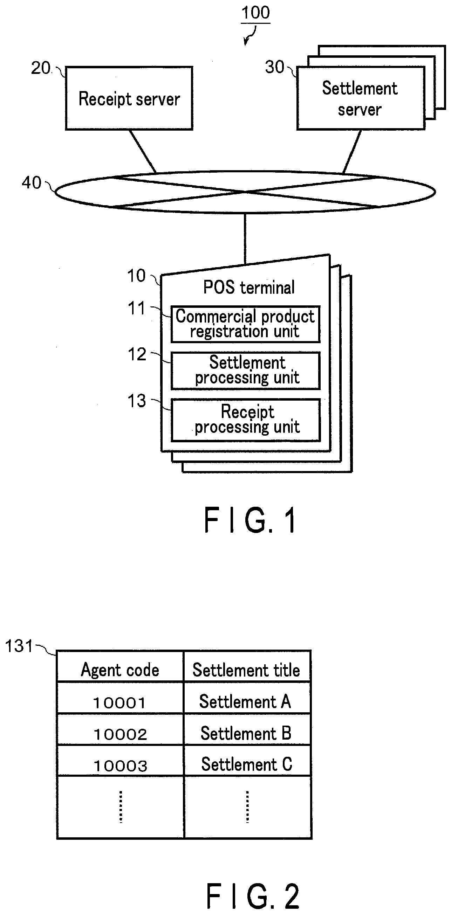

FIG. 1 is a system diagram showing an outline of the embodiment. A system of this embodiment includes a plurality of point-of-sales (POS) terminals 10, a receipt server 20, a plurality of settlement servers 30, and a communication network 40. The communication network 40 comprises one or more networks, such as the Internet, a telephone network, a local area network (LAN), and the like.

Each of the POS terminals 10 is a computer terminal disposed in a shop and utilized for registration and settlement of a commercial product purchased by a customer. The shop may be of any business category. The shop may be a retail shop, such as a mass merchandiser, a specialized shop, or the like, or may be an eating and drinking establishment. Each POS terminal 10 is connected to the communication network 40. Each POS terminal 10 may be directly connected to the communication network 40 or one or more POS terminals 10 may be connected to the communication network 40 via a relay server.

The receipt server 20 is a server computer managed by a corporate entity that manages an electronic receipt service. The electronic receipt service is a service to digitize print data of a receipt issued from the POS terminal 10 at the time of checkout in the shop, and to allow the making the settlement to view the receipt as an image through a communication terminal owned by the customer. The communication terminal is typically a smartphone. The communication terminal may be a tablet terminal, a personal computer, or the like. The receipt server 20 is connected to the communication network 40. The receipt server 20 provides the customer with the electronic receipt service in cooperation with each POS terminal 10 connected to the communication network 40.

A user who utilizes the electronic receipt service installs a dedicated application program, a so-called electronic receipt application, on a portable communication terminal, for example, a smartphone. By installing the electronic receipt application on the communication terminal, a receipt ID that functions as an identifier of the user is issued. The receipt ID is displayed on a display of the communication terminal in the form of, for example, a bar code. When the receipt ID is read by a scanner of the POS terminal 10 at a time of settlement of the commercial transaction in which the user is the customer, receipt data indicating details of the commercial transaction is digitized and transmitted from the POS terminal 10 to the receipt server 20. The receipt data includes the receipt ID. The user accesses the receipt server 20 using the electronic receipt application of the communication terminal. As a result, a receipt image based on the receipt data including the set receipt ID is downloaded from the receipt server 20 on the communication terminal. The user can view the downloaded receipt image through the communication terminal.

Each of the settlement servers 30 is a server computer managed by a settling agent that assists settlement of commercial transactions by electronic settlement. Electronic settlement includes, for example, credit card settlement, electronic money settlement, and code settlement using a bar code, a two-dimensional code, or the like. Each settlement server 30 is connected to the communication network 40. Each settlement server 30 assists electronic settlement executed by each POS terminal 10 through the communication network 40.

The settlement server 30 issues a settlement number each time an electronic settlement assisted by the settlement server 30 is executed by the POS terminal 10. The settlement number is, typically, a serial number. The settlement number is called an approval number, a transaction serial number, a slip number, or the like, depending on the settling agent. The settlement number is included in the receipt data of the commercial transaction electronically settled, together with the settlement title, the settlement amount, and the like.

The settlement title is a title representing a type of the settlement amount. If the settlement amount is a payment amount of a cash settlement, the settlement title is, for example, "cash". If the settlement amount is a payment amount of a credit card settlement, the settlement title is, for example, "trust" or "credit". If the settlement amount is a payment amount of an electronic money settlement, the settlement title is a proper noun indicating, for example, the kind of electronic money. If the settlement amount is a payment amount of a code settlement, the settlement title is a proper noun indicating, for example, the kind of code settlement.

Herein, the receipt server 20 and the settlement servers 30 constitute a server system 100. Specifically, the server system 100 is a computer network system in which the receipt server 20 and the settlement servers 30 are connected through the communication network 40. The server system 100 may include a server other than the receipt server 20 and the settlement servers 30.

Next, the POS terminal 10, the receipt server 20, and the settlement servers 30 will be explained in detail.

The POS terminal 10 has a function as a commercial product registration unit 11, a function as a settlement processing unit 12, and a function as a receipt processing unit 13. The commercial product registration unit 11 functions to register sales data of the commercial product purchased by the customer in a memory. In this function, a total amount of commercial transactions with the customer is calculated. The function as the commercial product registration unit 11 is well known; therefore, detailed explanations thereof are omitted.

The settlement processing unit 12 functions to settle the commercial transactions based on payment data relative to the total amount of commercial transactions. In the case of cash payment, the settlement processing unit 12 executes a cash settlement process. In the case of credit card payment, the settlement processing unit 12 executes a credit card settlement process. In the case of electronic money payment, the settlement processing unit 12 executes an electronic money settlement process. In the case of code settlement payment, the settlement processing unit 12 executes a code settlement process. The cash settlement process, the credit card settlement process, the electronic money settlement process, and the code settlement process are all well-known processes; therefore, detailed explanations thereof are omitted. When the commercial transaction is settled by electronic settlement assisted by the settlement server 30, the settlement sales data is output from the POS terminal 10 to the settlement server 30, in the same manner as in the conventional art. The settlement sales data includes information on the customer making the settlement, information on a transaction date and time, information on a transaction shop, information on a settlement number and a settlement amount, etc.

The receipt processing unit 13 functions to process receipt data generated each time a commercial transaction is settled. The receipt processing unit 13 processes the receipt data using a POS side setting table 131 shown in FIG. 2. The POS side setting table 131 is downloaded from, for example, the receipt server 20, on each POS terminal 10.

The POS side setting table 131 is a data table in which a settlement title is set to each agent code. An agent code is a unique code set for each of the settling agents in order to individually identify each settling agent. The settlement title is a title representing a settlement amount in an electronic settlement that is being supported by the settlement server 30 of the settling agent specified by the corresponding agent code.

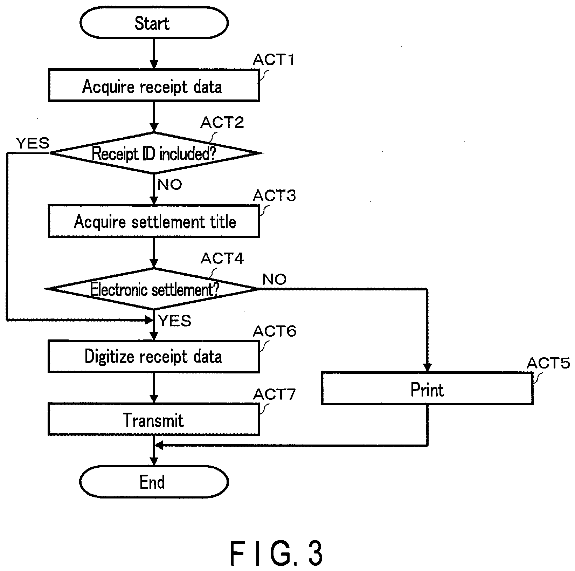

FIG. 3 is a flowchart showing a main procedure in the receipt processing unit 13. This process is started each time a commercial transaction is settled by the settlement processing unit 12. When a commercial transaction is settled, the receipt processing unit 13 acquires receipt data indicating details of the commercial transaction as ACT 1. The receipt data is generated by the settlement processing unit 12. The receipt data includes a transaction date and time, a transaction number, registered commercial product data, a total amount, a settlement title, a settlement amount, etc. In the case in which the receipt ID has already been read with the scanner of the POS terminal 10 at the time of settlement of a commercial transaction, the receipt ID is included in the receipt data. In the case in which the commercial transaction is settled by electronic settlement, the settlement number is included in the receipt data.

The receipt processing unit 13 confirms whether the receipt ID is included in the receipt data as ACT 2. If the receipt ID is included in the receipt data, the receipt processing unit 13 determines YES in ACT 2, and proceeds to ACT 6. The process in ACT 6 and the subsequent acts will be described later.

If the receipt ID is not included in the receipt data, the receipt processing unit 13 determines NO in ACT 2, and proceeds to ACT 3. The receipt processing unit 13 acquires the settlement title included in the receipt data as ACT 3. The receipt processing unit 13 confirms, as ACT 4, whether the settlement title is set in the POS side setting table 131, namely, whether the title represents the settlement amount of the electronic settlement. If the settlement title is not set in the POS side setting table 131, namely, if the settlement is not an electronic settlement, the receipt processing unit 13 determines NO in ACT 4, and proceeds to ACT 5. The receipt processing unit 13 controls a printer of the POS terminal 10 and outputs the receipt data to a receipt paper sheet as ACT 5.

On the other hand, if the settlement title is set in the POS side setting table 131, the receipt processing unit 13 determines YES in ACT 4, and proceeds to ACT 6.

Thus, if the receipt processing unit 13 acquires the receipt data including the receipt ID or acquires the receipt data not including the receipt ID but including the settlement title of electronic settlement, the receipt processing unit 13 proceeds to ACT 6. The receipt processing unit 13 digitizes the receipt data as ACT 6. Specifically, the receipt processing unit 13 converts the receipt data of an unstructured format to receipt data of a structured format, namely, so-called electronic receipt data, in accordance with predetermined conversion rules.

Upon completion of the digitization of the receipt data, the receipt processing unit 13 transmits the digitized receipt data to the receipt server 20 as ACT 7. The receipt data is transmitted to the receipt server 20 through the communication network 40.

Thus, when the receipt data is printed out to a receipt paper sheet, or digitized and transmitted to the receipt server 20, the receipt processing unit 13 ends the process of the procedure shown in the flowchart of FIG. 3.

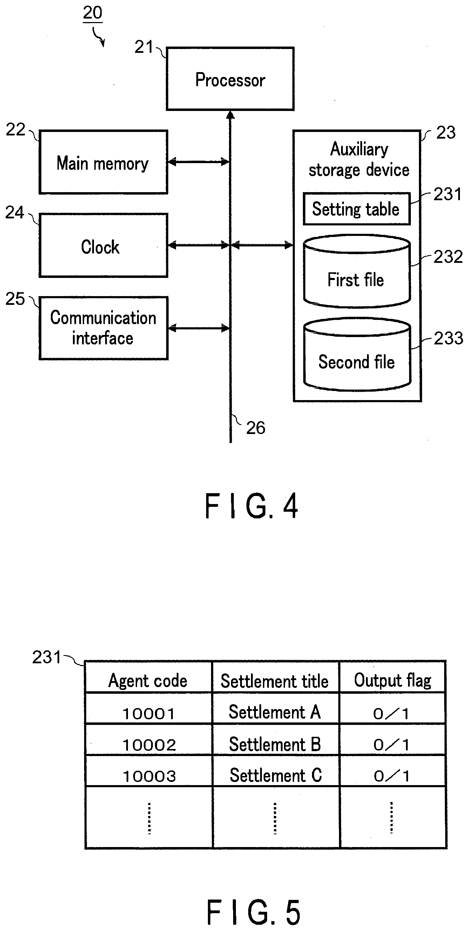

FIG. 4 is a block diagram showing a main circuit configuration of the receipt server 20. The receipt server 20 includes a processor 21, a main memory 22, an auxiliary storage device 23, a clock 24, and a communication interface 25. In the receipt server 20, the processor 21, the main memory 22, the auxiliary storage device 23, the clock 24, and the communication interface 25 are connected through a system bus 26. The system bus 26 includes an address bus, a data bus, and the like. The receipt server 20 constitutes a computer by connecting the processor 21 with the main memory 22, the auxiliary storage device 23, the clock 24, and the communication interface 25 through the system bus 26.

The processor 21 corresponds to a central portion of the computer. The processor 21 controls the respective components to implement various functions as the receipt server 20 in accordance with an operating system or an application program. The processor 21 may be a processing circuit, for example, a central processing unit (CPU), a graphics processing unit (GPU), an application specific integrated circuit (ASIC), or a programmable logic device (e.g., a simple programmable logic device (SPLD), a complex programmable logic device (CPLD), a field programmable gate array (FPGA), or the like). The processor 21 is not necessarily limited to a single processing circuit, but may be configured by a combination of a plurality of processing circuits.

The main memory 22 corresponds to a main storage portion of the computer mentioned above. The main memory 22 includes a non-volatile memory region and a volatile memory region. The main memory 22 stores an operating system or an application program in the non-volatile memory region. The main memory 22 stores data necessary for the processor 21 to execute processes of the respective components in the volatile memory region. The main memory 22 also uses the volatile memory region as a work area in which data is rewritten by the processor 21 as appropriate. The non-volatile memory region is, for example, a read only memory (ROM). The volatile memory region is, for example, a random access memory (RAM).

The auxiliary storage device 23 corresponds to an auxiliary storage portion of the computer. The auxiliary storage device 23 may be one known storage device or a combination of two or more known storage devices, such as an electrically erasable programmable read-only memory (EEPROM), a hard disc drive (HDD), a solid state drive (SSD), and the like. The auxiliary storage device 23 stores data to be used by the processor 21 when performing various processes, data generated by the processes performed by the processor 21, and the like. In some cases, the auxiliary storage device 23 may store application programs.

The application programs stored in the main memory 22 or the auxiliary storage device 23 include a control program described later. A method of installing the control program on the main memory 22 or the auxiliary storage device 23 is not particularly limited. The control program may be recorded in a removable recording medium or distributed through communications via the network, so that the control program can be installed on the main memory 22 or the auxiliary storage device 23. The recording medium may be of any type, such as a CD-ROM or a memory card, as long as it can store programs and can be read by a device.

The clock 24 functions as a time information source of the receipt server 20. The processor 21 acquires a current date and time based on the time information counted by the clock 24.

The communication interface 25 is connected to the communication network 40. The receipt server 20 performs data communications with the POS terminals 10 and the settlement servers 30 connected to the communication network 40 through the communication interface 25. The receipt server 20 also performs data communications with communication terminals that have had the electronic receipt application installed, through the communication interface 25.

The receipt server 20 having the configuration described above uses parts of the storage area of the auxiliary storage device 23 as a region for a server side setting table 231, a region for a first file 232, and a region for a second file 233.

FIG. 5 is a schematic diagram showing a data structure of the server side setting table 231. As illustrated, the server side setting table 231 is a data table in which the settlement title and an output flag are set to each agent code. The output flag is one-bit data to identify whether the settling agent specified by the corresponding agent code is a settling agent of a target of provision of purchase information. The purchase information is a commercial product code, a trade name, a price, and the like, of a commercial product purchased by the customer, namely, a so-called purchased commercial product. In this embodiment, an output flag indicating the settling agent of the target of provision of purchase information is "1", and an output flag indicating a settling agent other than the target of provision of purchase information is "0".

The first file 232 and the second file 233 function as receipt storage units to store receipt data received from the POS terminals 10. The processor 21 sorts the receipt data received from the POS terminals 10 into the first file 232 or the second file 233, or both the first file 232 and the second file 233, with reference to the server side setting table 231.

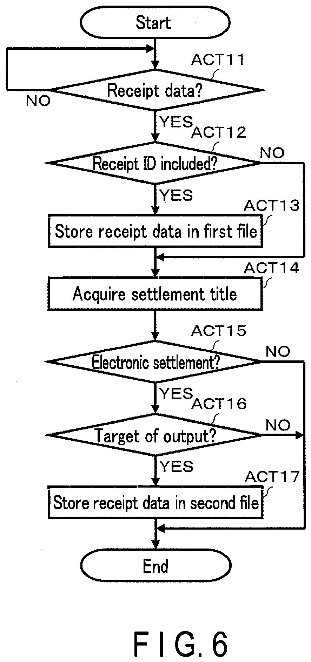

FIG. 6 is a flowchart showing a procedure of a receipt data sorting process executed by the processor 21 of the receipt server 20. The processor 21 stands by for receiving receipt data as ACT 11. Upon receipt of the receipt data, the processor 21 determines YES in ACT 11, and proceeds to ACT 12. The processor 21 confirms whether the receipt ID is included in the receipt data as ACT 12. If the receipt ID is included in the receipt data, the processor 21 determines YES in ACT 12, and proceeds to ACT 13. The processor 21 stores the receipt data in the first file 232 as ACT 13. The processor 21 then proceeds to ACT 14.

If the receipt ID is not included in the receipt data, the processor 21 determines NO in ACT 12. The processor 21 skips the process of ACT 13, and proceeds to ACT 14. The processor 21 acquires the settlement title included in the receipt data as ACT 14. Then, the processor 21 confirms, as ACT 231, whether the settlement title is set in the server side setting table 231, namely, whether the title represents the settlement amount of the electronic settlement. If the settlement title is not set in the server side setting table 231, namely, if the settlement is not an electronic settlement, the processor 21 determines NO in ACT 15, and ends the sorting process.

If the settlement title is set in the server side setting table 231, namely, if the settlement is an electronic settlement, the processor 21 checks an output flag corresponding to the settlement title set in the server side setting table 231 as ACT 16. If the output flag is "0", namely, in the case of electronic settlement relating to a settling agent other than the target of provision of purchase information, the processor 21 determines NO in ACT 16, and ends the sorting process.

If the output flag is "1", namely, if it is a case of electronic settlement relating to a settling agent of the target of provision of purchase information, the processor 21 determines YES in ACT 16, and proceeds to ACT 17. The processor 21 stores the receipt data in the second file 233 as ACT 17. Thus, the processor 21 ends the sorting process.

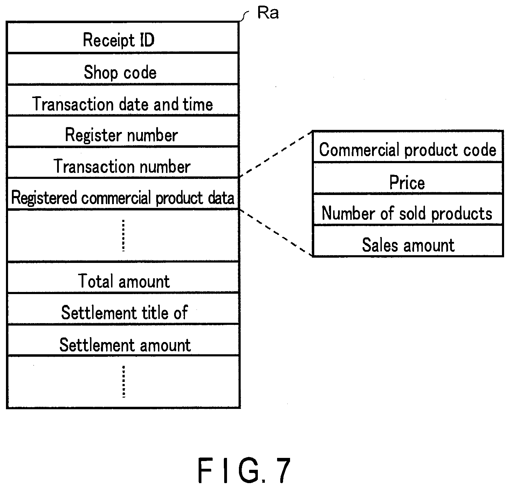

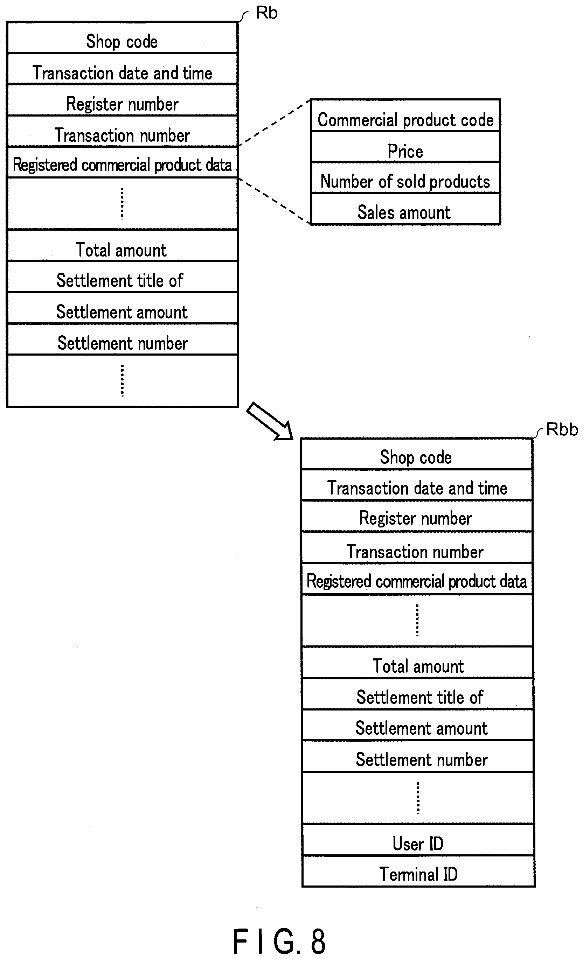

Through the sorting process, the receipt data including the receipt ID, namely, the receipt data relating to commercial transactions of customers who receives the electronic receipt service, is stored in the first file 232. The receipt data on commercial transactions settled by electronic settlement relating to the settling agent of the target of provision of purchase information is stored in the second file 233. Even when the receipt data relates to a commercial transaction of a customer who receives the electronic receipt service, the receipt data on commercial transaction settled by electronic settlement relating to the settling agent of the target of provision of purchase information is stored in both the first file 232 and the second file 233. In the following, the receipt data stored in the first file 232 is referred to as first receipt data Ra (see FIG. 7). The receipt data stored in the second file 233 is referred to as second receipt data Rb (see FIG. 8).

The first file 232 and the second file 233 constitute receipt storage units. The first file 232 constitutes a first receipt storage unit and the second file 233 constitutes a second receipt storage unit.

The processor 21 that executes the sorting process constitutes a processing unit. Specifically, the processor 21 causes the first receipt storage unit (the first file 232) to store receipt data with second identification information (a receipt ID) that identifies the user of the electronic receipt, and causes the second receipt storage unit (the second file 233) to store receipt data with information indicating that the commercial transaction was settled with the assistance of the settling agent (the settlement title).

FIG. 7 is a schematic diagram showing a structure of the first receipt data Ra stored in the first file 232. As illustrated, the first receipt data Ra includes at least a receipt ID, a shop code, a transaction date and time, a register number, a transaction number, registered commercial product data, a total amount, a settlement title, a settlement amount, etc. The shop code is an identifier of the shop where the POS terminal 10 that transmits the first receipt data Ra is located. The transaction date and time is a date and time when the commercial transaction was settled by the POS terminal 10. The register number is an identifier of the POS terminal 10. The transaction number is a serial number issued for a commercial transaction settled by the POS terminal 10. The registered commercial product data is information on a commercial product registered as a purchased commercial product, and includes a commercial product code, a price, the number of sold products, a sales amount, etc. The registered commercial product data may include a trade name instead of the commercial product code. Alternatively, the registered commercial product data may include both a commercial product code and a trade name. The total amount is a sum of the sales amounts included in the registered commercial product data. The settlement title and the settlement amount are the settlement title and the settlement amount of payment data for the total amount. The first receipt data Ra relating to the electronically settled commercial transaction further includes a settlement number.

FIG. 8 is a schematic diagram showing a structure of the second receipt data Rb stored in the second file 233. As illustrated, the second receipt data Rb includes at least a shop code, a transaction date and time, a register number, a transaction number, registered commercial product data, a total amount, a settlement title, a settlement amount, a settlement number, etc. The second receipt data Rb relating to a commercial transaction of a customer who receives the electronic receipt service includes a receipt ID.

Another set of second receipt data Rbb shown in FIG. 8 represents second receipt data after a purchase information delivery process (described later) is executed. The second receipt data Rbb is data including a user ID and a terminal ID in addition to the second receipt data Rb. The user ID and the terminal ID are described later.

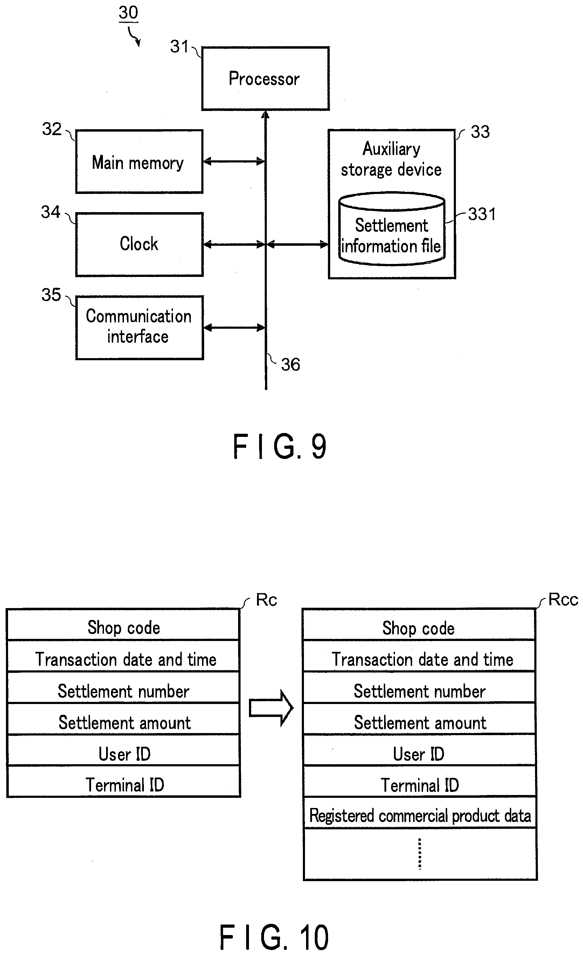

FIG. 9 is a block diagram showing a main circuit configuration of the settlement server 30. The settlement server 30 includes a processor 31, a main memory 32, an auxiliary storage device 33, a clock 34, and a communication interface 35. In the settlement server 30, the processor 31, the main memory 32, the auxiliary storage device 33, the clock 34, and the communication interface 35 are connected through a system bus 36. The system bus 36 includes an address bus, a data bus, and the like. The settlement server 30 constitutes a computer by connecting the processor 31 with the main memory 32, the auxiliary storage device 33, the clock 34, and the communication interface 35 through the system bus 36.

The processor 31 corresponds to a central portion of the computer. The processor 31 controls the respective components to implement various functions as the settlement server 30 in accordance with an operating system or an application program. The processor 31 is, for example, a CPU.

The main memory 32 corresponds to a main storage portion of the computer mentioned above. The main memory 32 includes a non-volatile memory region and a volatile memory region. The main memory 32 stores an operating system or an application program in the non-volatile memory region. The main memory 32 stores data necessary for the processor 31 to execute processes of the respective components in the volatile memory region. The main memory 32 also uses the volatile memory region as a work area in which data is rewritten by the processor 31 as appropriate. The non-volatile memory region is, for example a ROM. The volatile memory region is, for example a RAM.

The auxiliary storage device 33 corresponds to an auxiliary storage portion of the computer. The auxiliary storage device 33 may be one known storage device or a combination of two or more known storage devices, such as an EEPROM, an HDD, an SSD, and the like. The auxiliary storage device 33 stores data to be used by the processor 31 when performing various processes, data generated by the processes performed by the processor 31, and the like. In some cases, the auxiliary storage device 33 may store application programs.

The application programs stored in the main memory 32 or the auxiliary storage device 33 include a control program described later. A method of installing the control program on the main memory 32 or the auxiliary storage device 33 is not particularly limited. The control program may be recorded in a removable recording medium or distributed through communications via the network, so that the control program can be installed on the main memory 32 or the auxiliary storage device 33. The recording medium may be of any type, such as a CD-ROM or a memory card, as long as it can store programs and can be read by a device.

The clock 34 functions as a time information source of the settlement server 30. The processor 31 acquires a current date and time based on the time information counted by the clock 34.

The communication interface 35 is connected to the communication network 40. The settlement server 30 performs data communications with the POS terminals 10 and the receipt server 20 connected to the communication network 40 through the communication interface 35.

The settlement server 30 having the configuration described above uses a part of the storage area of the auxiliary storage device 33 as a region for a settlement information file 331. The settlement information file 331 is a data file to store settlement sales data transmitted from the POS terminals 10 to the settlement server 30.

FIG. 10 is a schematic diagram showing a structure of settlement sales data Rc stored in the settlement information file 331. The settlement sales data Rc includes a shop code, a transaction date and time, a settlement number, a settlement amount, a user ID, and a terminal ID. The user ID is an identifier of a customer who utilizes the electronic settlement. The terminal ID is an identifier of a communication terminal, such as a smartphone.

The customer who utilizes the electronic settlement carries out user registration in advance for a settling agent. Through the user registration, a unique user ID is issued from the settling agent. The user ID is stored in a medium for electronic settlement, such as a credit card, an electronic money card, a smartphone, or the like. When executing electronic settlement, the POS terminal 10 fetches the user ID from the medium. The POS terminal 10 transmits the settlement sales data Rc including the user ID to the settlement server 30 of the corresponding settling agent. If the medium is a communication terminal, the POS terminal 10 also fetches a terminal ID from the communication terminal. The POS terminal 10 transmits the settlement sales data Rc further including the terminal ID to the settlement server 30. If the medium is not a communication terminal, the terminal ID of the settlement sales data Rc relating to the electronic settlement is NULL data.

The other settlement sales data Rcc shown in FIG. 10 is settlement sales data after the purchase information delivery process described later is executed. The settlement sales data Rcc is data including one or more pieces of registered commercial product data in addition to the settlement sales data Rc.

Thus, the settlement sales data RC before the purchase information delivery process is executed does not include registered commercial product data. Therefore, the settling agent can grasp information on who utilized the electronic settlement where, when, and for how much money, from the settlement sales data Rc of the settlement information file 331, but cannot grasp information on the commercial product purchased by the person making the settlement, namely, purchase information. The purchase information is stored in the receipt server 20. Therefore, in the present embodiment, a control program to realize a process of acquiring purchase information from the receipt server 20, namely, a so-called purchase information acquisition application, is implemented in the settlement server 30. Furthermore, in cooperation with the purchase information acquisition application, a control program to realize a process of supplying necessary purchase information in reply to the settlement server 30, namely, a so-called purchase information reply application, is implemented in the receipt server 20.

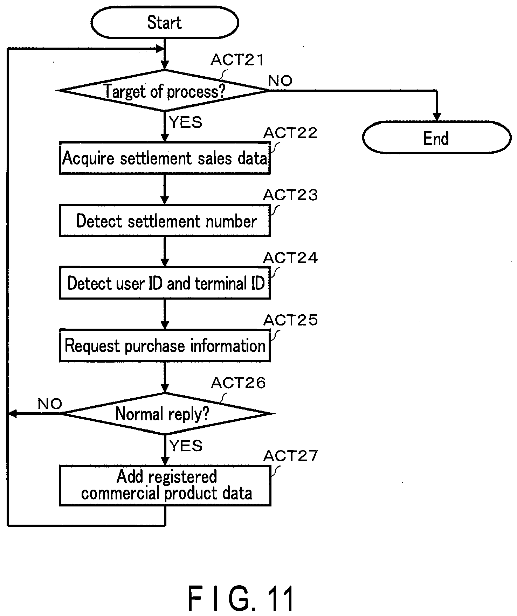

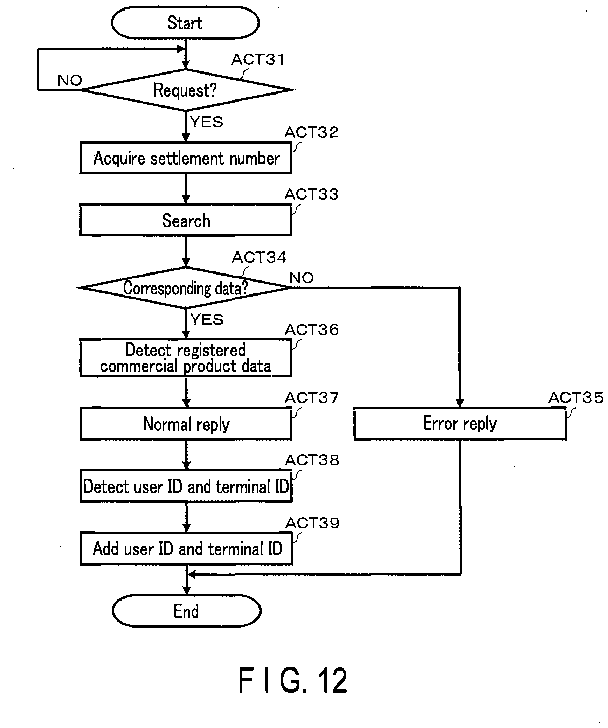

FIG. 11 is a flowchart showing a procedure of a main information process executed by the processor 31 of the settlement server 30 in accordance with the purchase information acquisition application. FIG. 12 is a flowchart showing a procedure of a main information process executed by the processor 21 of the receipt server 20 in accordance with the purchase information reply application. Hereinafter, main operations of the server system 100 of the first embodiment will be explained with reference to the drawings. The operations explained below are mere examples. The procedure of the operations is not particularly limited, as long as similar effects and advantages can be obtained.

The system is activated each time settlement sales data Rc is stored in the settlement information file 331. The purchase information acquisition application may be activated at a preset time, for example, at 0 minutes of every hour.

When the purchase information acquisition application is activated, the processor 31 of the settlement server 30 starts the process of the procedure shown in the flowchart of FIG. 11. First, as ACT 21, the processor 31 confirms whether the settlement sales data which is a target of the process is stored in the settlement information file 331. The settlement sales data that is a target of the process is the settlement sales data Rc to which registered commercial product data is not added. The settlement sales data Rcc to which registered commercial product data was added is not a target of the process.

If the settlement sales data Rc that is a target of the process is stored in the settlement information file 331, the processor 31 determines YES in Act 21, and proceeds to ACT 22. The processor 31 acquires the settlement sales data Rc from the settlement information file 331 as ACT 22. Then, the processor 31 acquires a settlement number from the settlement sales data Rc as ACT 23. Furthermore, the processor 31 acquires a user ID and a terminal ID from the settlement sales data Rc as ACT 24.

The processor 31 transmits a purchase information request command to the receipt server 20 as ACT 25. The purchase information request command includes the settlement number, the user ID, and the terminal ID acquired from the settlement sales data Rc. The purchase information request command is transmitted to the receipt server 20 through the communication network 40.

The purchase information reply application resides in the receipt server 20. The processor 21 of the receipt server 20 stands by for a purchase information request command as ACT 31 shown in FIG. 12. Upon receipt of the purchase information request command through the communication network 40, the processor 21 determines YES in ACT 31, and proceeds to ACT 32. The processor 21 acquires the settlement number from the purchase information request command as ACT 32. Then, as ACT 33, the processor 21 searches the second file 233 using the settlement number as a search key.

The processor 21 determines, as ACT 34, whether the second receipt data Rb including the settlement number as the search key is present or not. If the corresponding second receipt data Rb is not stored in the second file 233, the processor 21 determines NO in ACT 34, and proceeds to ACT 35. As ACT 35, the processor 21 transmits an error reply command to the settlement server 30, which is the source of the purchase information request command.

For example, if a failure occurs in a communication between the POS terminal 10 and the receipt server 20, the settlement sales data of the electronically settled commercial transaction is transmitted to the settlement server 30, while the receipt data of the commercial transaction is not stored in the second file 233. Such a case is determined to be an error.

If the second receipt data Rb including the settlement number as the search key is stored in the second file 233, the processor 21 determines YES in ACT 34, and proceeds to ACT 36. The processor 21 acquires registered commercial product data from the second receipt data Rb as ACT 36. Then, as ACT 37, the processor 21 transmits a normal reply command to the settlement server 30, which is the source of the purchase information request command. The normal reply command includes the registered commercial product data acquired in the process of ACT 36.

The processor 21 detects the user ID and the terminal ID from the purchase information request command as ACT 38. Then, the processor 21 adds, as ACT 39, the user ID and the terminal ID to the second receipt data Rb including the settlement number as the search key.

In this way, the processor 21 ends the reply process with respect to the purchase information request command. Then, upon receipt of a next purchase information request command, the processor 21 executes the process of ACT 32 to ACT 38 in the same manner as described above.

Explanations will return to FIG. 11.

The normal reply command or the error reply command is received by the settlement server 30, which is the source of the purchase information request command, through the communication network 40. The processor 31 of the settlement server 30 that receives the purchase information request command stands by for a reply command as ACT 26. In this standby state, if the processor 31 receives an error reply command, it determines NO in ACT 26, and returns to ACT 2.

If the processor 31 receives a normal reply command, it determines YES in ACT 26, and proceeds to ACT 27. As ACT 27, the processor 31 adds the registered commercial product data included in the normal reply command to the settlement sales data Rc of the target of the process acquired in the process of ACT 22. Thus, the settlement sales data Rc becomes the settlement sales data Rcc. Thereafter, the processor 31 returns to ACT 21.

The processor 31 confirms whether other settlement sales data Rc which is a target of the process is stored in the settlement information file 331. If the settlement sales data Rc which is a target of the process is stored, the settlement sales data Rc is processed in the same manner as described above in ACT 22 to ACT 27. If the settlement sales data Rc which is a target of the process is not stored, the processor 31 ends the information process of the procedure shown in the flowchart of FIG. 11.

Herein, the processor 31 of the settlement server 30 constitutes an inquiry unit by executing the process of ACT 21 to ACT 25 shown in FIG. 11. Specifically, the processor 31 executes an inquiry to the receipt server 20 with the transaction identification information (settlement number) included in the settlement sales data Rc reported from the settlement terminal (the POS terminal 10).

The processor 31 also constitutes a storage unit by executing the process of ACT 26 and Act 27 shown in FIG. 11. Specifically, the processor 31 stores information regarding the purchased commercial product (registered commercial product data) output from the receipt server 20 in reply to the inquiry in association with the settlement sales data Rc including the transaction identification information (settlement number).

The processor 21 of the receipt server 20 constitutes an acquisition unit by executing the process of ACT 31 to ACT 36 shown in FIG. 12. Specifically, the processor 21 acquires the receipt data on the commercial transaction, identified by the transaction identification information (the settlement number) included in the settlement sales data reported from the settlement terminal to the settling agent that assists settlement of the commercial transaction, from the receipt storage unit (the second file 233) that stores the receipt data (the second receipt data Rb) generated by the settlement terminal (the POS terminal 10) at the time of settlement of the commercial transaction.

The processor 21 also constitutes an output unit by executing the process of ACT 37 shown in FIG. 12. Specifically, the processor 21 outputs information relating to a purchased commercial product included in the receipt data (the second receipt data Rb) acquired by the acquisition unit to the settlement server 30 of the settling agent.

Furthermore, the processor 21 constitutes a detection unit and an addition unit by executing the process of ACT 38 and ACT 39 shown in FIG. 12. Specifically, the processor 21 detects first identification information (the user ID and the terminal ID) set to the person making the settlement of the commercial transaction identified by the transaction identification information (the settlement number). Then, the processor 21 adds the first identification information (the user ID and the terminal ID) to the receipt data (the second receipt data Rb) stored in the receipt storage unit (the second file 233) and acquired by the acquisition unit.

As described above in detail, in the server system 100, the settlement server 30, in which the purchase information acquisition application is implemented, cooperates with the receipt server 20, in which the purchase information reply application is implemented. Through the cooperation, the settlement sales data Rc stored in the settlement information file 331 of the settlement server 30 becomes the purchase settlement sales data Rcc including purchase information provided from the receipt server 20, namely, registered commercial product data. Therefore, the settling agent can grasp information on what was purchased, in addition to the information on who utilized the electronic settlement where, when, and for how much money.

Thus, the receipt server 20 can realize a service for providing the settling agent with the information on the commercial product purchased by the person making the settlement using the electronic settlement.

Furthermore, the receipt server 20 is configured to provide the settlement server 30 with the information relating to the purchased commercial product in reply to a request command from the settlement server 30. Therefore, since the receipt server 20 may provide only the settlement server 30 that made a request with the information relating to the purchased commercial product, a burden imposed on the information provision is light.

Moreover, the receipt server 20 includes the server side setting table 231. The receipt server 20 can store in the second file 233 only the receipt data of the electronic settlement relating to the settling agent to which the output flag "1" is set, namely, the settling agent which is a target of provision of purchase information. Therefore, the storage capacity of the second file 233 can be saved. In addition, if a settling agent which is not a target of provision of purchase information requests provision of purchase information, or if a settling agent which is a target of provision of purchase information reports that the provision of purchase information is unnecessary, it suffices only that the value of the output flag is changed. Therefore, it is possible to address a request from the settling agents easily and quickly.

The receipt server 20 has a function of adding the user ID and the terminal ID included in the purchase information request command to the second receipt data Rb stored in the second file 233 to create the second receipt data Rbb. The user ID or the terminal ID added to the second receipt data Rb is effective as an identifier of the person making the settlement who utilizes the electronic settlement.

On the other hand, the second receipt data Rb does not necessarily include a receipt ID, which is an identifier of the person who utilizes the electronic receipt. Thus, according to the present embodiment, the POS terminal 10 digitizes not only receipt data including a receipt ID, but also receipt data including a settlement title set to the POS side setting table 131, even if the receipt data does not include a receipt ID, and transmits the digitized data to the receipt server 20. Regardless of whether the receipt data includes a receipt ID or not, the receipt server 20 stores the second receipt data Rb including the settlement title in the second file 233.

Therefore, the server system 100 includes means for associating the user ID or the terminal ID with the receipt ID of the person making the settlement identified by the user ID or the terminal ID. The means may be provided by the receipt server 20 or the settlement server 30. By associating the user ID or the terminal ID with the receipt ID, the second receipt data Rbb to which the user ID and the terminal ID were added can be used in place of the first receipt data Ra that can receive the electronic receipt service. Therefore, even a person making the settlement who is not a target of the electronic receipt service at the time of electronic settlement can receive the electronic receipt service by associating the user ID or the terminal ID.

### [Second Embodiment]

The first embodiment is an example in which the processor 21 of the receipt server 20 outputs information relating to the purchased commercial product in real time each time the processor 21 receives a purchase information request command from the settlement server 30. Therefore, in accordance with an increase in purchase information request commands, there is concern about an increase in a process load of the processor 21. The second embodiment is an example in which the processor 21 collectively outputs information relating to the purchased commercial products to the settlement server 30 by a batch process.

The second embodiment differs from the first embodiment in a part of the procedure executed by the processor 31 of the settlement server 30 explained with reference to FIG. 11, and a part of the procedure executed by the processor 21 of the receipt server 20 explained with reference to FIG. 12. The other parts explained with reference to FIGS. 1 to 10 are common to the first and second embodiments, and they are also used in the second embodiment.

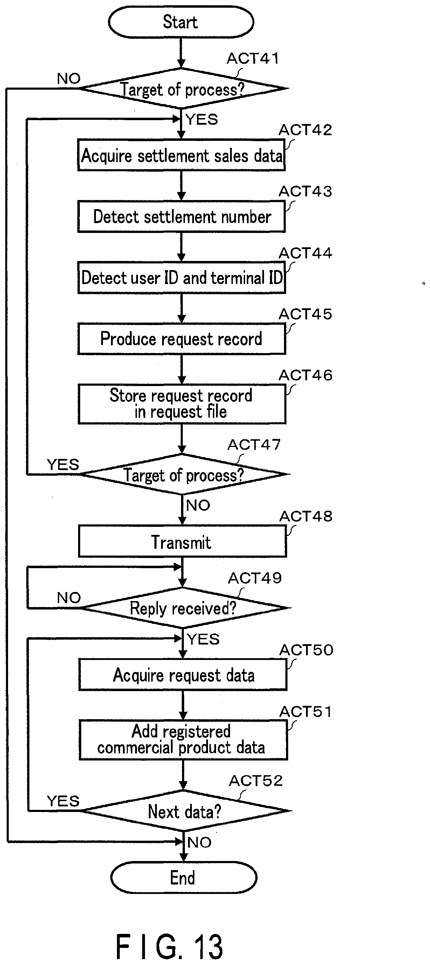

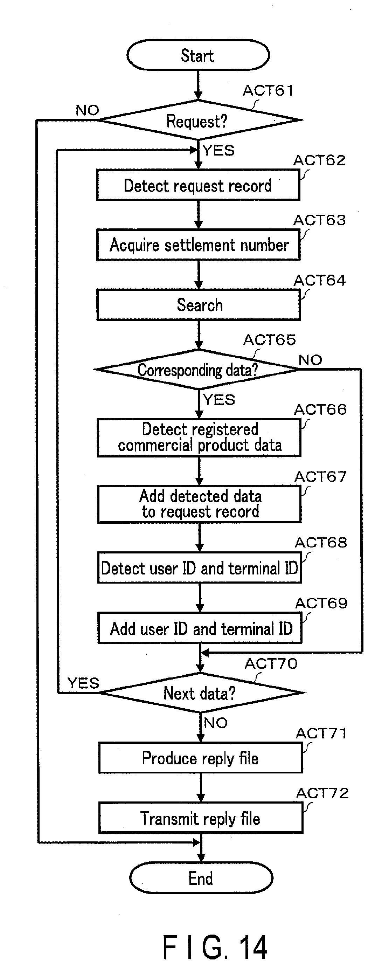

FIG. 13 is a flowchart showing a procedure of a main information process executed by the processor 31 of the settlement server 30 in accordance with the purchase information acquisition application. FIG. 14 is a flowchart showing a procedure of a main information process executed by the processor 21 of the receipt server 20 in accordance with the purchase information reply application. Hereinafter, main operations of the server system 100 of the second embodiment will be explained with reference to the drawings. The operations explained below are mere examples. The procedure of the operations is not particularly limited, as long as similar effects and advantages can be obtained.

The purchase information acquisition application is activated at a preset time, for example, at 0:00 a.m. When the purchase information acquisition application is activated, the processor 31 of the settlement server 30 starts the process of the procedure shown in the flowchart of FIG. 13. First, as ACT 41, the processor 31 confirms whether the settlement sales data, which is a target of the process, is stored in the settlement information file 331. The settlement sales data, i.e., a target of the process, is the settlement sales data Rc to which registered commercial product data was not added. The settlement sales data Rcc to which registered commercial product data was added is not a target of the process. If the settlement sales data Rc, i.e., a target of the process, is not stored in the settlement information file 331, the processor 31 determines NO in ACT 41, and ends the process.

If the settlement sales data Rc, i.e., a target of the process, is stored in the settlement information file 331, the processor 31 determines YES in ACT 41, and proceeds to ACT 42. The processor 31 acquires the settlement sales data Rc, i.e., a target of the process, from the settlement information file 331 as ACT 42. Then, the processor 31 acquires a settlement number from the settlement sales data Rc as ACT 43. Furthermore, the processor 31 acquires a user ID and a terminal ID from the settlement sales data Rc as ACT 44.

The processor 31 produces a request record as ACT 45. The request record includes the settlement number, the user ID, and the terminal ID acquired from the settlement sales data Rc. The processor 31 stores the request record in a request file as ACT 46. The request file is cleared before the process is started.

As ACT 47, the processor 31 confirms whether further settlement sales data Rc, which is a target of the process, is stored in the settlement information file 331. If the settlement sales data Rc is stored, the processor 31 determines YES in ACT 47, and returns to ACT 42. Then, the processor 31 executes the process in ACT 42 and the subsequent acts in the same manner as described above. Therefore, request records produced based on the settlement sales data Rc, which is a target of the process, are accumulated in the request file.

If the processor 31 confirms that the settlement sales data Rc, i.e., a target of the process, is not stored in the settlement information file 331, the processor 31 determines NO in ACT 47, and proceeds to ACT 48. The processor 31 transmits a request file to the receipt server 20 as ACT 48. The request file is transmitted to the receipt server 20 through the communication network 40.

The purchase information reply application is also activated at a preset time, for example, at 2:00 a.m. When the purchase information reply application is activated, the processor 21 of the receipt server 20 confirms as ACT 61 in FIG. 14 whether the request file is received. If the request file is not received, the processor 21 determines NO in ACT 61, and ends the process.

If the request file is received, the processor 21 determines YES in ACT 61, and proceeds to ACT 62. The processor 21 acquires the request record from the request file as ACT 62. Then, the processor 21 acquires a settlement number from the request record as ACT 63. As ACT 64, the processor 21 searches the second file 233 using the settlement number as a search key.

The processor 21 determines, as ACT 65, whether the second receipt data Rb including the settlement number as the search key is present or not. If the corresponding second receipt data Rb is not stored in the second file 233, the processor 21 determines NO in ACT 65, and proceeds to ACT 70.

If the second receipt data Rb including the settlement number as the search key is stored in the second file 233, the processor 21 determines YES in ACT 65, and proceeds to ACT 66. The processor 21 acquires registered commercial product data from the second receipt data Rb as ACT 66. As ACT 67, the processor 21 adds the registered commercial product data to the request record detected from the request file in the process of ACT 62.

The processor 21 detects the user ID and the terminal ID from the request record as ACT 68. Then, the processor 21 adds, as ACT 69, the user ID and the terminal ID to the second receipt data Rb including the settlement number as the search key. Thus, the second receipt data Rb becomes the second receipt data Rbb to which the user ID and the terminal ID were added.

The processor 21 confirms, as ACT 70, whether another request record is present in the request file. If a request record is present, the processor 21 determines YES in ACT 70, and returns to ACT 62. Then, the processor 21 executes the process in ACT 62 and the subsequent acts in the same manner as described above.

Thus, if the process from ACT 62 to ACT 69 was executed for all of the request records stored in the request file, the processor 21 determines NO in ACT 70, and proceeds to ACT 71. The processor 21 produces, as ACT 71, a reply file with the request data to which the registered commercial product data was added. Then, as ACT 72, the processor 21 transmits a reply file to the settlement server 30, which is the source of the request file. In this way, the processor 21 ends the information process of the procedure shown in FIG. 14.

The reply file transmitted from the receipt server 20 is transmitted to the settlement server 30, which is the source of the request file through the communication network 40.

Explanations will return to FIG. 13.

The processor 31 of the settlement server 30 that transmitted the request file stands by for a reply file as ACT 49. Upon receipt of the reply file, the processor 31 determines YES in ACT 49, and proceeds to ACT 50. The processor 31 acquires request data from the reply file as ACT 50. As ACT 51, the processor 31 adds the registered commercial product data, to which the request data was added, to the settlement sales data Rc identified by the request data. Thus, the settlement sales data Rc becomes the settlement sales data Rcc to which the registered commercial product data was added.

The processor 31 confirms, as ACT 52, whether other request data is present in the reply file or not. If present, the processor 31 determines YES in ACT 52, and returns to ACT 50. Specifically, the processor 31 acquires the registered commercial product data from the request data, and repeats the process of adding it to the corresponding settlement sales data Rc.

If no other request data is present in the reply file, the processor 31 determines NO in ACT 52. The processor 31 ends the information process of the procedure shown in the flowchart of FIG. 13.

Therefore, also in the second embodiment with the configuration described above, the settling agent can grasp information on what was purchased, in addition to the information on who utilized the electronic settlement where, when, and for how much money. Thus, the receipt server 20 can realize a service for providing the settling agent with the information on the commercial product purchased by the person making the settlement using the electronic settlement.

Moreover, the receipt server 20 performs the information provision service for the settlement server 30 by a batch process. Therefore, even if the amount of requests for purchase information is increased, the process load of the receipt server 20 will not considerably increase.

In the second embodiment, the processor 31 of the settlement server 30 may execute the process of ACT 41 to ACT 47 and the process of ACT 48 to ACT 52 at different timings. Specifically, each time the processor 31 detects the settlement sales data Rc of the target of process, the processor 31 produces request data based on the settlement sales data Rc. The processor 31 accumulates the request data in the request file. Thereafter, for example, at a preset time, the processor 31 transmits the request file to the receipt server 20. Upon receipt of a reply file from the receipt server 20, the processor 31 adds the registered commercial product data to the settlement sales data Rc based on the data in the reply file. With this configuration, a similar effect can also be obtained.

The embodiments are not limited to the above-described embodiments of the server system 100 including the receipt server 20 and the settlement server 30.

In the above embodiments, the receipt server 20 is described as an example of the receipt server that provides an electronic receipt service. The receipt server 20 does not necessarily correspond to the electronic receipt service. For example, the receipt server may be specialized in storing receipt data which includes a settlement title of a predetermined settling agent in the second file 233, and supplying registered commercial product data, i.e., purchase information from the corresponding receipt data in reply to the purchase information request command from the settlement server 30. Such a receipt server does not require the first file 232. Furthermore, the processor 21 does not require ACT 12 and ACT 13 of the procedure in the flowchart shown in FIG. 6.

In the above embodiment, the transaction identification information included in the settlement sales data is described as a settlement number. Some settling agent may not issue a settlement number for a commercial transaction with electronic settlement. In this case, a shop code and a transaction date and time, or a transaction date and time and a transaction amount, may be used as the transaction identification information.

However, the transaction date and time included in the settlement sales data Rc may be a date and time when the settlement server 30 acquired the settlement sales data Rc. In such a case, since the clock of the POS terminal 10 and the clock 34 of the settlement server 30 do not necessarily coincide, the transaction date and time in the settlement sales data Rc and the transaction date and time in the receipt data may not coincide. Therefore, the scope of the searches of the receipt server 20 need to have a slight margin in transaction date and time, not perfect matching.

The above embodiment is an example in which a setting table that does not store an output flag is provided as the POS side setting table 131 in the POS terminal 10. As another embodiment, an equivalent of the server side setting table 231 that stores an output flag may be provided as the POS side setting table in the POS terminal 10. This can eliminate waste of transmission of receipt data settled by electronic settlement relating to a settling agent that is not a target of provision of purchase information to the receipt server 20 from the POS terminal 10. As a result, an effect of reducing the communication traffic of the communication network 40 can be obtained.

In the above embodiment, the POS terminal 10 is described as having functions of the commercial product registration unit 11, the settlement processing unit 12, and the receipt processing unit 13. For example, the settlement terminal dedicated to electronic settlement connected to the POS terminal 10 may have the functions of the settlement processing unit 12 and the receipt processing unit 13. In this case, the POS side setting table 131 may be provided in the settlement terminal instead of the POS terminal 10.

The program concerning the present embodiment may be transferred in a state of being stored in an electronic device or in a state of not being stored in an electronic device. In the latter case, the program may be transferred via a network or may be transferred in a state of being stored in a recording medium. The recording medium is a non-transitory tangible medium. The recording medium is a computer-readable medium. The recording medium may be of any type, such as a CD-ROM or a memory card, as long as it can store programs and can be read by the computer.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the spirit of the invention. The accompanying claims and their equivalents are intended to cover such embodiments or modifications as would fall within the scope and spirit of the invention.

## Claims

1. A receipt server comprising:
an acquisition unit configured to acquire receipt data on a commercial transaction identified by transaction identification information included in settlement sales data reported from a settlement terminal to a settling agent that assists settlement of the commercial transaction, from a receipt storage unit that stores receipt data generated by the settlement terminal at a time of settlement of the commercial transaction; and
an output unit configured to output information relating to a purchased commercial product included in the receipt data acquired by the acquisition unit to a settlement server of the settling agent.

2. The receipt server according to claim 1, wherein:
the acquisition unit is configured to acquire receipt data on a commercial transaction identified by the transaction identification information included in a request command from the settlement server; and
the output unit is configured to output information on the purchased commercial product to the settlement server which is a source of the request command.

3. The receipt server according to claim 1, further comprising:
a detection unit configured to detect first identification information set by a person making the settlement of the commercial transaction identified by the transaction identification information; and
an addition unit configured to add the first identification information to the receipt data stored in the receipt storage unit and acquired by the acquisition unit.

4. The receipt server according to claim 1, wherein the receipt storage unit includes a first receipt storage unit and a second receipt storage unit,
the receipt server further comprising a processing unit configured to cause the first receipt storage unit to store receipt data including second identification information that identifies an electronic receipt user, and to cause the second receipt storage unit to store receipt data including information indicating a commercial transaction settled by assistance of the settling agent, wherein
the acquisition unit is configured to acquire receipt data from the second receipt storage unit.

5. A server system comprising:
the receipt server according to any one of claims 1 to 4; and
a settlement server including an inquiry unit configured to execute an inquiry to the receipt server with transaction identification information included in settlement sales data reported from a settlement terminal, and a storage unit configured to store information relating to a purchased commercial product output from the receipt server in reply to the inquiry in association with the settlement sales data including the transaction identification information.

6. An information processing method comprising:
acquiring receipt data on a commercial transaction, identified by transaction identification information included in settlement sales data reported from a settlement terminal to a settling agent that assists settlement of the commercial transaction, from a receipt storage unit that stores receipt data generated by the settlement terminal at a time of settlement of the commercial transaction; and
outputting information relating to a purchased commercial product included in the acquired receipt data to a settlement server of the settling agent.

7. A program recording medium storing a program that causes a computer to:
acquire receipt data on a commercial transaction, identified by transaction identification information included in settlement sales data reported from a settlement terminal to a settling agent that assists settlement of the commercial transaction, from a receipt storage unit that stores receipt data generated by the settlement terminal at a time of settlement of the commercial transaction; and
output information relating to a purchased commercial product included in the acquired receipt data to a settlement server of the settling agent.
